# EUROPEAN PATENT APPLICATION

(11) **EP 2 570 014 A1**
(43) Date of publication of application: **20.03.2013**
(21) Application number: 12178958.0
(22) Date of filing: 02.08.2012
(51) Int. Cl.: A01B 33/02

(54) **An improved agricultural apparatus**

(30) Priority: 16.09.2011 IT RE20110069
(71) Applicant: Eurosystems S.p.A., 42045 Luzzara (Reggio Emilia) (IT)
(72) Inventor: Bovi, Fabio, 42045 Luzzara (Reggio Emilia) (IT)
(74) Representative: Corradini, Corrado

(57) **Abstract**

An agricultural apparatus (10), comprising a support frame (2) on which at least a work tool (30) is installed, which work tool (30) has a rotation axis (A) which is horizontal and suitable for coming into contact with a ground terrain such as to carry out a work operation, at least a wheel (6), which is supported idle by a support arm (7) rotatably associated to the support frame (2) and mobile between a lowered position in which the wheel (6) is resting on the ground and a raised position in which it is raised from the ground. The peculiarity of the invention consists in the fact that the rotation axis (B) of the support arm (7) with respect to the support frame (2) lies on a plane that is perpendicular to the rotation axis (A) of the work tool (30).

## Description

### Technical Field

The present invention relates to an agricultural apparatus mainly suitable for carrying out work on small plots of land, allotments and gardens. In particular, the present invention relates to a motor-hoe which can be controlled and guided by a user working on-foot, such as to carry out work operations such as hoeing, weeding and tilling soil, for example, to prepare it for sowing.

### Prior Art

As is known, usual motor hoes generally comprise a support frame, which is equipped with a bar or handlebars which can be grasped by a user such as to drive and guide the machine, and on which a motorized horizontal axis drive shaft is installed, on which two or more cutters are fixed that are destined to be in contact with the soil in order to loosen and break the clods of earth.

The support frame may be further provided with one or more support wheels, which can be located both anteriorly and posteriorly with respect to the drive shaft bearing the tools, and the function of which is to facilitate displacements of the hoe on the terrain when the hoe is inactive, with the drive shaft stationary. During work on the soil, the support wheels should not normally be in contact with the ground such as not to interfere with the action of the cutters, except in rare cases where the degree of penetration into the ground is to be minimized, for example, when only small clods of earth are to be shifted.

For this reason, the support wheels of some motor hoes are borne on a support that oscillates with respect to an axis that is parallel to the cutter drive shaft, which support is hinged to the support frame and can be blocked in at least one lowered position, in which it places the support wheels in contact with the ground, and in a raised position, which brings the support wheels to a height such that that they cannot contact the ground.

However, these known-type motor hoes, especially when the support wheels are located anterior to the rotating shaft of the cutters, exhibit some drawbacks related to the fact that, though the raising of the support wheels enables the cutter to sink into the ground so that it can do its work, in their raised position the support wheels increase the dimensions of the motor hoe in the forward direction, in the area in front of the cutters.

As can be imagined, during the forward movement of the hoe towards a vertical obstacle placed in the ground to be treated, be it a tree, a pole, a wall or whatever else, the support wheels in the raised position thereof are first brought into contact with the obstacle preventing the cutters from working the ground up to below the bottom of the obstacle or in an area in proximity thereof.

This involves, as a rule, the need for the user to perform various manoeuvres to reach the untilled area, so the hoeing, especially in areas where access is difficult, such as corners of bordered areas, is particularly laborious and complicated.

An aim of the present invention is to obviate the aforementioned drawbacks in the prior art, in a way that is simple, efficient and relatively inexpensive. These aims are attained by the characteristics of the invention as it is described in the independent claim. The dependent claims outline preferred and/or particularly advantageous aspects of the invention.

### Description of the Invention

In particular the invention discloses an agricultural apparatus comprising a support frame on which at least a work tool with a horizontal rotation axis is installed, which tool is destined to achieve direct contact with the ground in order to carry out a work operation; at least a wheel is present, supported idle by a support arm, substantially monolithic, rotatably and anteriorly associated to the support frame and movable between a lowered position in which the wheel is resting on the ground and a raised position in which it is raised from the ground.

The rotation axis of the support arm, with respect to the support frame, lies in a plane that is perpendicular to the rotation axis of the work tool.

Thanks to this solution, the motor hoe can be switched from the transport configuration (in which it is resting on the support wheel) to the working configuration (in which it is supported on the cutters) without the anterior horizontal dimensions of the motor hoe being increased, thus enabling great ease of manoeuvrability and of simplicity of use of the hoe itself.

### Brief Description of the Drawings

Further characteristics and advantages of the invention will be apparent from reading the following description given by way of non-limiting example and, with the aid of the accompanying figures of the drawings.
Figure 1 is a lateral view of an agricultural tool according to the invention with the support wheel in the lowered position.
Figure 2 is a lateral view of the agricultural tool of figure 1, with the support wheel in the raised position.
Figure 3 is an anterior front view of figure 1.
Figure 4 is a detail of figure 3 in larger scale.
Figure 5 is an anterior front view of the figure 2.
Figure 6 is a detail of figure 5 in larger scale.
Figure 7 is a tract along line VII-VII of figure 3 with the block in the retracted position.
Figure 8 is the view of figure 7 with the block in the advanced position.

### Best Way of Carrying Out the Invention

With particular reference to the figures of the drawings, an agricultural implement is denoted in its entirety by 10, which in the illustrated example is a motor hoe for non-professional use, which is particularly suitable for tilling and/or weeding small plots of land, such as in orchards or gardens, guided and controlled by a user walking behind it.

The motor hoe 10 comprises a rigid support frame 2 on which a horizontal-axis A rotation shaft 3 installed, on which a plurality of cutters 30 are coaxially keyed, which are individually provided with a central hub with a plurality of arched radial blades 31, and are suitable for being in direct contact with the soil such as to loosen and break the clods.

The drive shaft 3 is activated by an internal combustion engine 4, typically a petrol engine provided with a relative tank, which is installed on the support frame 2 above the cutters 30, and is connected to the drive shaft 3 via a transmission system (not shown). This transmission system is installed on-board the support frame 2, and generally comprises a pair of pulleys and a drive belt.

A handlebar is further fixed to the rear part of the support frame 2, exhibiting a pair of grips 50 suitable for being grasped by the user to guide and control the movements of the motor hoe 10 on the ground.

The handlebar 5 is shaped such as to be adjustable in length to fit different needs of the users as well as users' size and preferences. Suitable control organs (not illustrated) are generally installed on the handlebars 5, for example a throttle lever and/or an off-switch for the motor 4, which are located at grips 50 so as to be advantageously operated by the user's hands. A support wheel 6 is further installed on the support frame 2, which is arranged with a rotation axis parallel to the rotation axis of a drive shaft 3, frontally with respect thereto in the advancement direction imposed by the cutters 30, such as to be able to be in contact with the ground and facilitate the displacements of the motor-hoe 10, when rotation shaft 3 and the cutters 30 are stationary.

In particular, the support wheel 6 is rotatably coupled to a single idle support arm 7.

The support arm 7 is movable between a lowered position in which the support wheel 6 is resting on the ground and a raised position in which it is raised from the ground.

In particular, the support arm 7 is in turn rotatably associated to the support frame 2 with respect to a rotation axis B that is substantially perpendicular to the rotation axis A of the rotation shaft 3 and, therefore, to the support wheel 6.

In practice, the support wheel 6, in the lowered position of the support arm 7, has a horizontal rotation axis located in front of the rotation axis A of the drive shaft 3 and parallel thereto, and in the raised position of the support arm 7 has a rotation axis that is rotated substantially by an angle that is close to a right angle or slightly greater than a right angle.

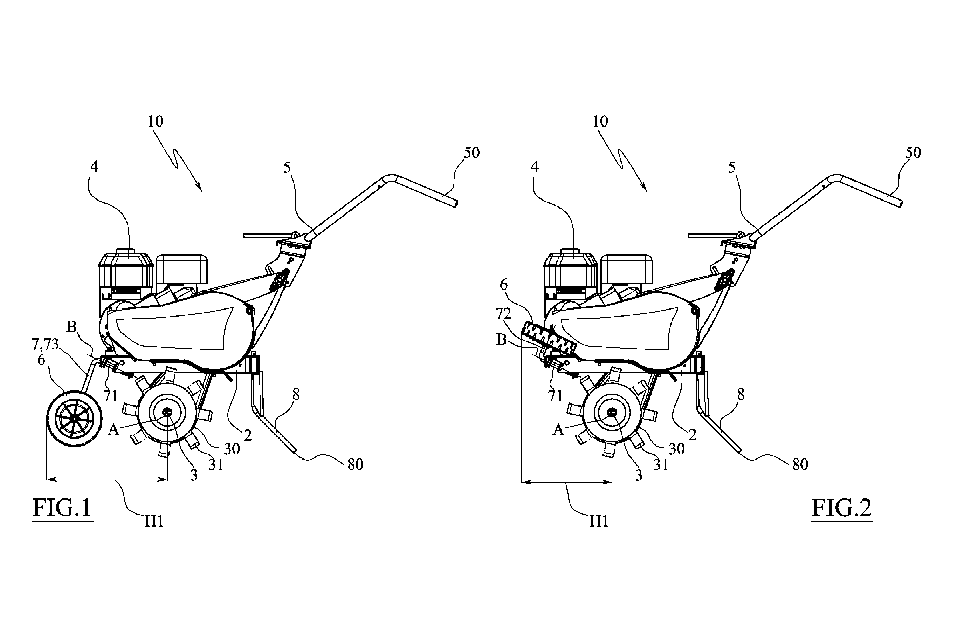

In this way, the support wheel 6 is carried in a raised position above the ground without the horizontal dimension (front) of the motor hoe 10 being increased, as can be seen from the sequence of figures 1 and 2.

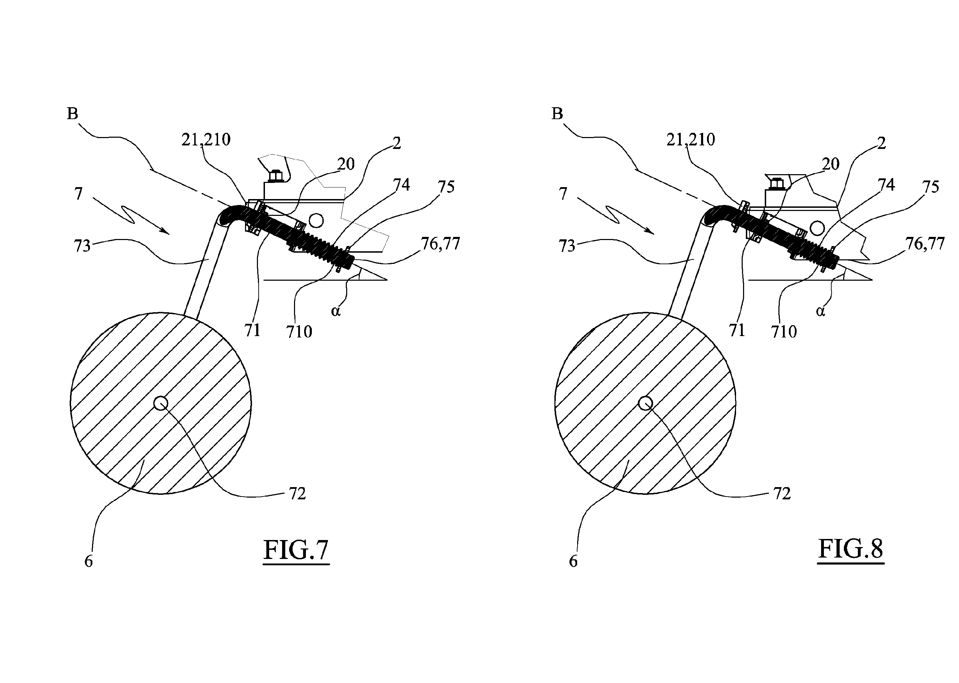

In the preferred embodiment shown in the figures, the rotation axis B of the support arm 7 is tilted, with respect to the support frame 2, from the horizontal by an acute angle α (see figures 7 and 8) such as to guarantee a reduction in the horizontal dimension (front) of the motor hoe 10 once the support arm 7 is taken from the lowered position to the raised position (the horizontal dimensions, respectively, are denoted by the letters H1 and H2 of figures 1 and 2).

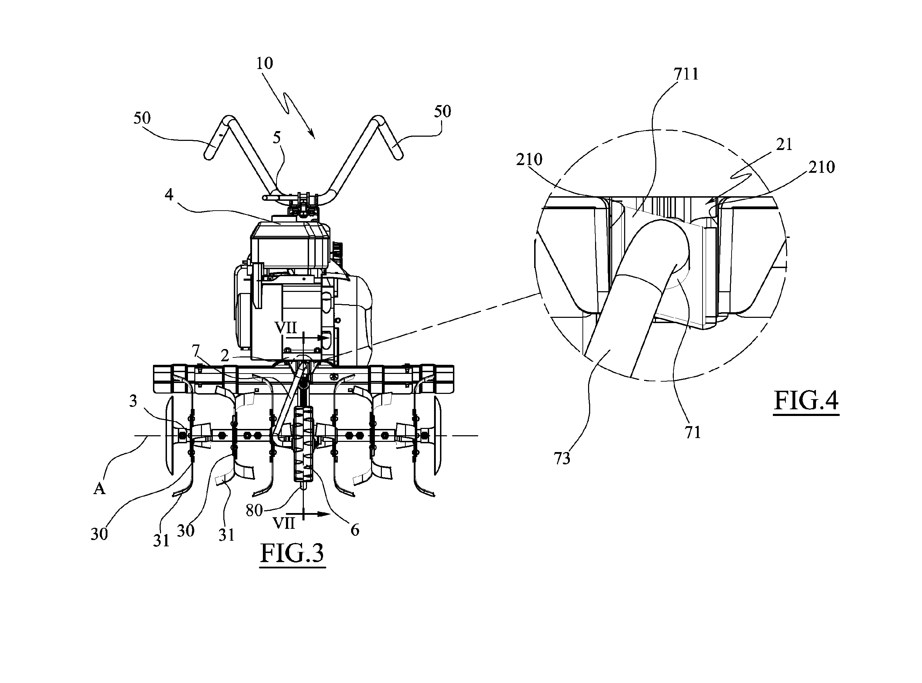

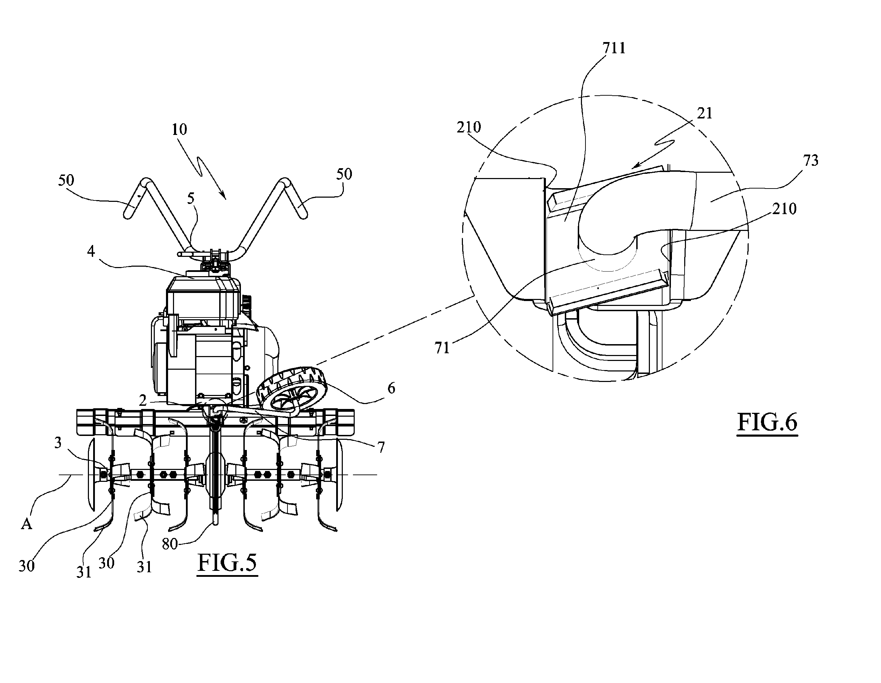

The rotation axis B of the support arm 7 with respect to the support frame 2 can be arranged substantially horizontally, in which case the horizontal dimension (front) of the motor hoe 10 remains unchanged at the passage of the support arm between the lowered position and the raised position. Furthermore, figures 3 and 5 show that the lateral dimensions of the motor hoe 10 remain unchanged, the support wheel 6, even in the raised position, remains contained within the frontal dimension determined by the rotation shaft 3 supporting the cutters 30.

In the present example, the support arm 7 comprises a first tract 71 of end rotatably associated to the support frame 2 with respect to the rotation axis B. The first tract 71 has a cylindrical end portion 710 suitable for being inserted with play inside a cylindrical seating 20 afforded in the support frame and exhibiting a longitudinal axis that is parallel to rotation axis B such that the end portion 710 defines a rotating pin for the support arm 7 with respect to the support frame 2.

The support arm 7 further comprises a second end tract 72, also cylindrical, suitsable for being arranged with a longitudinal axis thereof parallel to the rotation axis of the drive shaft 3 of the cutters 30.

The support wheel 6 is directly rotatably associated to the second tract 72 (e.g. axially blocked by a lock-ring), such that the second tract defines a rotation pin for the support wheel 6 with respect to the supporting arm 7.

An intermediate tract 73 is interposed between the first tract 71 and the second tract 72, for example being realized in a single piece with the first and the second tract, exhibiting an inclined longitudinal axis with respect both to the first tract and the second tract 72.

In the present example, the intermediate tract 73 is inclined by substantially a right-angle with respect to the first tract 71 and by an acute angle or a right-angle with respect to the second tract such that in the lowered position the intermediate tract 73 defines a tract that rises from the second tract 72 to the first tract 71, and the first tract 71 and the second tract 72 are (in plan) substantially squared.

The motor hoe 10 advantageously comprises locking means for blocking the oscillations of the support arm 7 in the raised position and the lowered position.

The locking means comprise at least a block 711 fixed to the first tract 71 of the support arm 7 in a median area thereof.

In practice, the block 711 defines a broadened area of the first tract 71 interposed between the intermediate tract 73 and the end portion 710, exhibiting lateral walls that lie on planes parallel to the longitudinal axis of the first tract 71 and being parallel in pairs to one another.

The block 711 has a rhomboid-based prism-shape, and exhibits a central hole which can be inserted with interference in the end portion 710 of the first tract 71 and thus be fixed to the first tract itself.

The support frame 2 has a sliding seating 21 which projects anteriorly of the cylindrical seating 20 and is aligned there-with, which sliding seating 21 has at least a pair of vertical walls 210 facing one another and which give rise to a sliding coupling with the block 711.

In practice, the block 711 is substantially snugly inserted in the sliding seating 21 so that two lateral walls thereof are retained between the walls 210 of the sliding seating 21 itself. The rotation of the support arm 7 with respect to the rotation axis B is such as to change the lateral walls of the block 711, which are retained between the walls 210 of the sliding seating 21.

In this way the rotation of the support arm 7 is allowed for discrete steps by substantially a right angle (or in any case equal to the inclination of the parallel paired surfaces of the block 711).

A spring 74 is threaded on the end portion 710 of first tract 71, which spring 74 can be compressed between a washer 75, also inserted on the the free end of the end portion 710 and axially retained by a cotter pin 76 threaded into a transversal hole 77 made in the end portion 710 itself, and the cylindrical seating 20.

The first tract 71 is therefore slidably associated to the support frame 2.

In practice, the end portion 710 can slide axially along the cylindrical seating 20 and the block 711 is thus mobile, in contrast to the spring 74, from a first retracted position, in which is inserted inside the sliding seating 21 in order to to block the mutual sliding rotation between the support frame 2 and the support arm 7, to a forward position, where it exits from the sliding seating 21.

When the block 711 is in the advanced position, the support arm 7 can be activated in rotation with respect to the rotation axis B, thus enabling rotation from the lowered position to the raised position of the support arm 7 itself and vice versa.

In practice, during transport of the motor hoe 10, when the drive shaft 3 and the cutters 30 are stationary, the user arranges the support wheel 6 in the lowered position (see figure 1).

The support arm 7 is blocked in rotation in this position thanks to the block 711; two lateral walls 210 are retained internally of the walls of the sliding seating 21.

In order to bring the support arm 7 into the raised position (see figure 2) it is sufficient to extract the block 711 from the prismatic seating 21 (see figure 8) by imposing a translating movement on the support arm 7 along the axis B of the first tract 7, against the action of the spring 74 (which is compressed between the washer 75 and the rear end of the cylindrical seating 20) and rotate the support arm itself, for example anti-clockwise, until the other two lateral walls of the block 711 are aligned in plan view (with respect to the longitudinal direction of the first tract 71) to the walls 210 of the prismatic seating itself.

Once in this configuration, the spring 74 stretches to return the prismatic block 71 into the sliding seating 20 (see figure 7) and the support arm 7 is maintained in the raised position.

To newly switch the support arm 7 back into the lowered position is sufficient to activate the support arm in the reverse direction, then cause the block 711 to exit from the sliding seating 21 and rotate the support arm 7 in a clockwise direction up to bringing the support wheel 6 up to having the rotation axis thereof horizontal.

The block 711 may exhibit various shapes, such as, for example, a parallelepiped with a square base or another conformation, depending on constructional requirements, or the washer 75 blocked by a cotter pin 76 may be replaced with an equivalent means for defining an abutting zone for the spring 74.

Further, the support arm 7 can be configured differently depending on requirements, for example made of several pieces associated to one another, or another technically equivalent solution.

Lastly, a profiled bar 8 is associated to the rear zone of the support frame 2, which bar 8 is usually known as a spur and exhibits a free end 80, slightly curved, which is destined to be in direct contact with the ground with the other connecting end joined to the support frame 2.

The shaped bar 8 is destined to function as a rear rest element for the motor hoe 10 during operation of the cutters 30, thus defining the inclination of the support frame 2 relative to the ground, and thus the centre of gravity of the motor hoe with respect to the rotation axis 10 of the drive shaft 3, on which the depth of soil working depends.

With the centre of gravity displaced in a forward direction, the motor hoe 10 tends to move forward on the ground without sinking, while with the center of gravity shifted backwards (towards the user), the motor hoe tends to sink 10 without advancing.

The invention thus conceived is susceptible to numerous modifications and variants, all falling within the inventive concept.

Moreover, all details can be replaced by other technically equivalent elements.

In practice the materials used, as well as the contingent shapes and dimensions, may be any, according to requirements, without forsaking the ambit of protection of the following claims.

## Claims

1. An agricultural apparatus (10), comprising a support frame (2) on which at least a work tool (30) is installed, which work tool (30) has a rotation axis (A) which is horizontal and suitable for making the tool (30) come into contact with a ground terrain such as to carry out a work operation, at least a wheel (6), which is supported idle by a support arm (7) rotatably associated to the support frame (2) and mobile between a lowered position in which the wheel (6) is resting on the ground and a raised position in which it is raised from the ground, the rotation axis (B) of the support arm (7) with respect to the support frame (2) lying on a plane that is perpendicular to the rotation axis (A) of the work tool (30), **characterised in that** the wheel (6) is associated anteriorly to the support frame (2) with respect to the advancement direction imposed by the work tool (30) and said support arm (7) comprises a first end tract (71) defining a rotating pin of the support arm (7) with respect to the support frame (2), a second end tract (72) defining a rotating pin of the wheel (6) with respect to the support arm (7) and an intermediate tract (73) realised in a single body with said first end tract (71) and second end tract (72).

2. The agricultural apparatus (10) of claim 1, wherein the wheel (6), in the lowered positin thereof, is arranged with a rotation axis thereof horizontally placed and wherein in the raised position thereof it exhibits a rotation axis that is inclined with respect to the horizontal.

3. The agricultural apparatus (10) of claim 1, **characterised in that** it comprises locking means suitable for blocking oscillations of the support arm (7) into the raised position and the lowered position.

4. The agricultural apparatus (10) of claims 3, wherein the locking means comprise at least a block (711) fixed to the first tract (71) of the support arm (7) and a seating (21) associated to the support frame (2) and provided with at least two facing walls (210), the block (711) giving rise to a sliding coupling with the seating (21).

5. The agricultural apparatus (10) of claim 4, wherein the first tract (71) is slidably associated with respect to the support frame (2), the block (711) being mobile from a first retracted postion, in which it is inserted internally of the seating (21) such as to block the reciprocal rotation between the support frame (2) and the support arm (7), to an advanced position, in which the block (711) exits from the seating (21), in contrast with elastic return means (74).

6. The agricultural apparatus (10) of claim 1, **characterised in that** it comprises activating means (4) suitable for rotating the work tool (30) about the rotation axis (A) on the support frame (2).
